(19) Europäisches Patentamt
European Patent Office
Office européen des brevets

(11) **EP 4 080 380 A1**

(12) **EUROPEAN PATENT APPLICATION**
published in accordance with Art. 153(4) EPC

(43) Date of publication:
**26.10.2022 Bulletin 2022/43**

(21) Application number: **20904487.4**

(22) Date of filing: **20.01.2020**

(51) International Patent Classification (IPC):
**G06F 16/33** (2019.01)

(86) International application number:
**PCT/CN2020/073296**

(87) International publication number:
**WO 2021/128529 (01.07.2021 Gazette 2021/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.12.2019 CN 201911358709**

(71) Applicant: **Beijing Benying Technologies Co., Ltd Beijing 100080 (CN)**

(72) Inventor: **BAO, Yunfeng Beijing 100080 (CN)**

(74) Representative: **Bayramoglu et al. Mira Office Kanuni Sultan Süleyman Boulevard 5387 Street Beytepe, floor 12, no:50 06800 Cankaya, Ankara (TR)**

(54) **TECHNOLOGY TREND PREDICTION METHOD AND SYSTEM**

(57) The present invention provides a technology trend prediction method and system. The method comprises acquiring paper data, and further comprises the following steps: processing the paper data to generate a candidate technology lexicon; screening the technology lexicon based on mutual information; calculating an independent word forming probability of a OOV word; extracting missed words in a title using a bidirectional long short memory network and a conditional random field (BI-LSTM+CRF) model; predicting a technology trend. The technology trend prediction method and system provided by the present invention analyzes relationship of technology changes in high-dimensional space, and predicts development of technology trend based on time by extracting technical features of papers through natural language processing and time sequence algorithms.

FIG. 1

EP 4 080 380 A1

**Description**

**TECHNICAL FIELD**

The present invention relates to the technical field of document analysis, in particular to a technology trend prediction method and system.

**BACKGROUND**

With the increasing development of science and technology, there are more and more technical development directions, and the technical variation relationships are more and more complicated. At present there are several methods for determining technology trends, but these methods preform determination mostly according to opinions of an expert group, and these methods are complicated, and the time cost is large.

It is well known that the technology trend is accurately and effectively judged can reduce the technical judgment time, therefore, developing a technology trend prediction method and system is very promising.

The invention patent with publication NO. CN106709021A discloses a technology trend prediction method and system. The system comprises a search module, a patent trend module, a business trend module and a prediction module; the search module is used for searching a plurality of patent data corresponding to a specific technology; the patent trend module is used for generating a first patent information according to the patent data; the business trend module is used for generating business trend information corresponding to the first patent information according to a plurality of target business data related to the patent data; the patent trend module is also used for generating a second patent information according to the business trend information, and generating a third patent information according to a plurality of predicted business data; and the prediction module is used for generating a technical trend prediction information according to the first patent information, the second patent information, and the third patent information. A disadvantage of this method is that it only predicts technology trend according to search and business trend, has a single dimension, and is difficult to embody value of one technology to other technologies.

**SUMMARY**

In order to solve the above technical problems, a technology trend prediction method and system provided by the present invention analyzes relationship of technology changes in high-dimensional space, and predicts development of technology trend based on time by extracting technical features of papers through natural language processing and time series algorithms.

A first object of the present invention is to provide a technology trend prediction method, the method comprises acquiring paper data, and further comprises the following steps:

    step 1: processing the paper data to generate a candidate technology lexicon;
    step 2: screening the technology lexicon based on mutual information;
    step 3: calculating an independent word forming probability of an OOV (out-of-vocabulary ) word;
    step 4: extracting missed words in a title by using a bidirectional long short memory network and a conditional random field (BI-LSTM+CRF) model;
    step 5: predicting a technology trend.

Preferably, the step of acquiring paper data includes constructing a set of paper data.

In any of the above solutions, it is preferred that the step 11 includes performing part-of-speech filtering by using an existing part-of-speech tagging, and obtaining a preliminary lexicon after the part-of-speech filtering is completed.

In any of the above solutions, it is preferred that the step 1 further includes improving OOV word discovery of the technology lexicon by using a Hidden Markov Model (HMM) method.

In any of the above solutions, it is preferred that a formula of the HMM method is:

$$log\{P(X|Y)P(Y)\} = \pi(y_1) + \sum_2^n \{log\{P(y_i|y_{i-1})\} + log\{P(x_i|y_i)\}\}$$

wherein, $x$ is an observation sequence, $y$ is a state sequence, $\pi(y_1)$ represents a probability that the first state is $y_1$, $P$ represents a state transition probability, $i$ represents the i-th state, and $n$ represents the number of states.

In any of the above solutions, it is preferred that the step 2 includes calculating the mutual information of the OOV words, selecting a suitable threshold, and removing the OOV words with the mutual information lower than this threshold, a calculation formula is:

$$MI_s = \frac{P(t_1t_2...t_i)}{\sum_i P(t_i) - PP(t_1t_2...t_i)} \approx \frac{\frac{f(t_1t_2...t_i)}{L}}{\frac{\sum_i f(t_i)}{L} - \frac{f(t_1t_2...t_i)}{L}}$$

wherein, $t_1t_2...t_i$ represents the OOV word, $t_i$ represents characters forming the OOV word, $f(t_1t_2...t_i)$ represents a frequency of the OOV word appearing in patent, $L$ represents a total word frequency of all words in the patent, $i$ represents the number of characters forming the OOV word, $P(t_1t_2...t_i)$ represents a probability that the $t_1t_2...t_i$ appears in the patent.

In any of the above solutions, it is preferred that the step 2 also includes that a result above is compensated with a word length when the frequency of long word is less than that of short word appearing in text, and a compensated result is:

$$MI_s \approx \frac{f(t_1t_2...t_i)}{\sum_i f(t_i) - f(t_1t_2...t_i)} \times N_i$$

wherein, $N_i = i \log_2 i$.

In any of the above solutions, it is preferred that the step 3 includes selecting another suitable threshold, and removing the OOV words with the independent word forming probability lower than this threshold, formulas are as follows:

$$Ldp = p(Lpstr|str) = \frac{p(Lpstr)}{p(str)} = \frac{f(Lpstr)}{f(str)}$$

$$Rdp = p(Rpstr|str) = \frac{p(Rpstr)}{p(str)} = \frac{f(Rpstr)}{f(str)}$$

$$Idp(str) = 1 - dp(pstr|str) = 1 - max\{Ldp(str), Rdp(str)\}$$

wherein, *str* represents a substring, *pstr* represents a parent string, *Rpstr* represents a right parent string, *Lpstr* represents a left parent string, p(.) represents the probability that a character string appears, $f(.)$ represents the frequency of the character string, *Ldp* represents dependence of the substring on the left parent string, *Rdp* represents the dependence of the substring on the right parent string, *Idp* represents the independent word forming probability of the substring, dp represents the dependence of the substring on the parent string and is the maximum value of the *Idp* and the *Rdp*.

In any of the above solutions, it is preferred that a training method of the BI-LSTM+CRF model includes the following sub-steps:

    step 41: constructing a labeled corpus according to the technology lexicon, taking the words in the title which also in the lexicon obtained in the step 3 as a training corpus of the model,
    taking the other words in the title as a predicted corpus of the model, and labeling the words in the title of the training corpus with B, I and O three types of tags, wherein B represents a beginning character of a new word, I represents an internal character of the new word, and O represents a non-technical noun word;
    step 42: converting the words into word vectors, and then encoding them by using the BI-LSTM;
    step 43: mapping an encoded result to a sequence vector with the dimension of the number of the tags through a fully connected layer;
    step 44: decoding the sequence vector by the CRF.

In any of the above solutions, it is preferred that the step 4 further includes applying the trained BI-LSTM+CRF model to the predicted corpus, and extracting words labeled as B and I as new words discovered.

In any of the above solutions, it is preferred that the step 2 includes the following sub-steps:

    step 51: extracting keywords of the paper data using the technology lexicon and an existing word segmentation system;

step 52: calculating word vectors of the extracted keywords in a high dimension to obtain $x_t \in \mathbb{R}^d$, wherein d is a spatial dimension, and IR is a set of word vectors;

step 53: matching a technology word group w={w1,w2,w3...} corresponding to a certain technology through a technical map, calculating correlated word of the word in the technology word group w in the paper data to obtain wt={wlt, w2t, w3t...}, wherein t is the time when the word appears for the first time in the paper;

step 54: performing K-means clustering for the correlated words generated after calculation to obtain the same or similar technology set;

step 55: obtaining a corresponding technical representation of the technology set using a weighted reverse maximum matching method, wherein different technology keywords have different weights in the technical map;

step 56: calculating the number of papers at different times for the technology by a Jaccard index to obtain a published time sequence of papers related with the technology, and a Jaccard index formula is:

$$(w1, w2) = \frac{w1 \cap w2}{w1 \cup w2}$$

wherein, $w1$ is a keyword in the technology set, and $w2$ is a keyword in the paper;

step 57: calculating the technology trend by an ARIMA (Autoregressive Integrated Moving Average) model;

step 58: using an unweighted maximum matching and edge cutting algorithm, finally obtaining technology relevance without communication to calculate a technology change trend between technology clusters.

In any of the above solutions, it is preferred that the keywords are extracted using a weighted term frequency - inverse document frequency (TF-IDF ) method, and a formula is:

$$weght(T_{ij}) = tf_{ij} \times idf_j = \frac{n_{ij}}{\sum_k n_{kj}} \times log \frac{|D|}{|\{j : term_i \in d_j\}| + 1}$$

wherein, $T_{ij}$ is a feature word, $tf_{ij}$ is a feature word frequency, $idf_j$ is an inverse document frequency, $n_{ij}$ is the number of occurrences of the feature word in the paper $d_j$, k is the number of words in one paper, $n_{kj}$ is the total number of words in the paper $d_j$, D is the total number of all papers in the corpus, $|\{j : term_i \in d_j\}|$ is the number of documents containing the feature word $term_i$.

In any of the above solutions, it is preferred that a formula of the clustering is:

$$c^{(i)} := arg \min_j \left\| x^{(i)} - \mu_j \right\|^2$$

wherein,x is a technology word group vector, $\mu$ is a technology core word vector.

In any of the above solutions, it is preferred that a formula for calculating the technology trend is:

$$\left(1 - \sum_{i=1}^p \phi_i L^i\right)(1 - L)^d X_t = \left(1 + \sum_{i=1}^q \theta_i L^i\right)\varepsilon_t$$

wherein, p is a autoregressive term, $\phi$ is a slope coefficient, L is a lag operator, d is a fractional order, X is a technical correlation, q is a corresponding number of moving average terms, $\theta$ is a moving average coefficient, $\varepsilon$ is a technical coefficient.

A second object of the present invention is to provide a technology trend prediction system, the system comprises an acquisition module used for acquiring paper data, and further comprises the following modules:

a processing module, used for processing the paper data to generate a candidate technology lexicon;

a screening module, used for screening the technology lexicon based on mutual information;

a calculation module, used for calculating an independent word forming probability of an OOV (out-of-vocabulary) word;

an extraction module, used for extracting missed words in a title by using a bidirectional long short memory network and a conditional random field (BI-LSTM+CRF) model;

a prediction module, used for predicting a technology trend.

Preferably, the acquisition module is also used for constructing a set of paper data.

In any of the above solutions, it is preferred that the processing module is also used for performing part-of-speech filtering by using an existing part-of-speech tagging, and obtaining a preliminary lexicon after the part-of-speech filtering is completed.

In any of the above solutions, it is preferred that the processing module is also used for improving OOV word discovery of the technology lexicon by using a Hidden Markov Model (HMM) method.

In any of the above solutions, it is preferred that a formula of the HMM method is:

$$log\{P(X|Y)P(Y)\} = \pi(y_1) + \sum_2^n \{log\{P(y_i|y_{i-1})\} + log\{P(x_i|y_i)\}\}$$

wherein, $x$ is an observation sequence, $y$ is a state sequence, $\pi(y_1)$ represents a probability that the first state is $y_1$, $P$ represents a state transition probability, $i$ represents the i-th state, and $n$ represents the number of states.

In any of the above solutions, it is preferred that the screening module is also used for calculating the mutual information of the OOV words, selecting a suitable threshold, and removing the OOV words with the mutual information lower than this threshold, a calculation formula is:

$$MI_s = \frac{P(t_1 t_2 ... t_i)}{\sum_i P(t_i) - PP(t_1 t_2 ... t_i)} \approx \frac{\frac{f(t_1 t_2 ... t_i)}{L}}{\frac{\sum_i f(t_i)}{L} - \frac{f(t_1 t_2 ... t_i)}{L}}$$

wherein, $t_1 t_2 ... t_i$ represents the OOV word, $t_i$ represents characters forming the OOV word, $f(t_1 t_2 ... t_i)$ represents a frequency of the OOV word appearing in patent, $L$ represents a total word frequency of all words in the patent, $i$ represents the number of characters forming the OOV word, $P(t_1 t_2 ... t_i)$ represents a probability that the $t_1 t_2 ... t_i$ appears in the patent.

In any of the above solutions, it is preferred that the screening module is also used for that a result above is compensated with a word length when the frequency of long word is less than that of short word appearing in text ,and a compensated result is:

$$MI_s \approx \frac{f(t_1 t_2 ... t_i)}{\sum_i f(t_i) - f(t_1 t_2 ... t_i)} \times N_i$$

wherein, $N_i = i \, log_2 \, i$.

In any of the above solutions, it is preferred that the calculation module is also used for selecting another suitable threshold, and removing the OVV words with the independent word forming probability lower than this threshold, formulas are as follows:

$$Ldp = p(Lpstr|str) = \frac{p(Lpstr)}{p(str)} = \frac{f(Lpstr)}{f(str)}$$

$$Rdp = p(Rpstr|str) = \frac{p(Rpstr)}{p(str)} = \frac{f(Rpstr)}{f(str)}$$

$$Idp(str) = 1 - dp(pstr|str) = 1 - max\{Ldp(str), Rdp(str)\}$$

wherein, *str* represents a substring, *pstr* represents a parent string, *Rpstr* represents a right parent string, *Lpstr* represents a left parent string, p(.) represents the probability that a character string appears, *f*(.) represents the frequency of the character string, *Ldp* represents dependence of the substring on the left parent string, *Rdp* represents the dependence of the substring on the right parent string, *Idp* represents the independent word forming probability of the substring, dp represents the dependence of the substring on the parent string and is the maximum value of the *Idp* and the *Rdp.*

In any of the above solutions, it is preferred that a training method of the BI-LSTM+CRF model includes the following sub-steps:

step 41: constructing a labeled corpus according to the technology lexicon, taking the words in the title which also in the lexicon obtained in the step 1 to the step 13 as a training corpus of the model, taking the other words in the title as a predicted corpus of the model, and labeling the words in the title of the training corpus with B, I and O three types of tags, wherein B represents a beginning character of a new word, I represents an internal character of the new word, and O represents a non-technical noun word;

step 42: converting the words into word vectors, and then encoding them by using the BI-LSTM;

step 43: mapping an encoded result to a sequence vector with the dimension of the number of the tags through a fully connected layer;

step 44: decoding the sequence vector by the CRF.

In any of the above solutions, it is preferred that the extraction module is also used for applying the trained BI-LSTM+CRF model to the predicted corpus, and extracting words labeled as B and I as new words discovered.

In any of the above solutions, it is preferred that an operation of the prediction module includes the following sub-steps:

step 51: extracting keywords of the paper data using the technology lexicon and an existing word segmentation system;

step 52: calculating word vectors of the extracted keywords in a high dimension to obtain $x_t \in \mathbb{R}^d$, wherein d is a spatial dimension, and IR is a set of word vectors;

step 53: matching a technology word group w={w1,w2,w3...} corresponding to a certain technology through a technical map, calculating correlated word of the word in the technology word group w in the paper data to obtain wt={wlt, w2t, w3t...}, wherein t is the time when the word appears for the first time in the paper;

step 54: performing K-means clustering for the correlated words generated after calculation to obtain the same or similar technology set;

step 55: obtaining a corresponding technical representation of the technology set using a weighted reverse maximum matching method, wherein different technology keywords have different weights in the technical map;

step 56: calculating the number of papers at different times for the technology by a Jaccard index to obtain a published time sequence of papers related with the technology, and a Jaccard index formula is:

$$(w1, w2) = \frac{w1 \cap w2}{w1 \cup w2}$$

wherein, *w*1 is a keyword in the technology set, and *w*2 is a keyword in the paper;

step 57: calculating the technology trend by an ARIMA (Autoregressive Integrated Moving Average) model;

step 58: using an unweighted maximum matching and edge cutting algorithm, finally obtaining technology relevance without communication to calculate a technology change trend between technology clusters.

In any of the above solutions, it is preferred that the keywords are extracted using a weighted term frequency - inverse document frequency ( TF-IDF ), and a formula is:

$$weght(T_{ij}) = tf_{ij} \times idf_j = \frac{n_{ij}}{\sum_k n_{kj}} \times log \frac{|D|}{|\{j: \; term_i \in d_j\}| + 1}$$

wherein, $T_{ij}$ is a feature word, $tf_{ij}$ is a feature word frequency, $idf_j$ is an inverse document frequency, $n_{ij}$ is the number of occurrences of the feature word in the paper $d_j$, k is the number of words in one paper, $n_{kj}$ is the total number of words in the paper $d_j$, D is the total number of all papers in the corpus, |{j: $term_i \in d_j$}| is the number of documents containing the feature word $term_i$.

In any of the above solutions, it is preferred that a formula of the clustering is:

$$c^{(i)} := \arg\min_{j} \left\| x^{(i)} - \mu_j \right\|^2$$

wherein, $x$ is a technology word group vector, $\mu$ is a technology core word vector.

In any of the above solutions, it is preferred that a formula for calculating the technology trend is:

$$\left(1 - \sum_{i=1}^{p} \phi_i L^i\right)(1-L)^d X_t = \left(1 + \sum_{i=1}^{q} \theta_i L^i\right)\varepsilon_t$$

wherein, $p$ is a autoregressive term, $\phi$ is a slope coefficient, $L$ is a lag operator, d is a fractional order, $X$ is a technical correlation, q is a corresponding number of moving average terms, $\theta$ is a moving average coefficient, $\varepsilon$ is a technical coefficient.

The present invention provides the technology trend prediction method and system, which can objectively analyze the relationship between the technologies, predict the technology trend, and judge the technology development direction, etc.

**BRIEF DESCRIPTION OF THE DRAWINGS**

FIG. 1 is a flowchart of a preferred embodiment of a technology trend prediction method according to the present invention.

FIG. 1A is a flowchart of a training method of a model in the embodiment shown in FIG. 1 according to the technology trend prediction method of the present invention.

FIG. 1B is a flowchart of a technology trend prediction method in the embodiment shown in FIG. 1 according to the technology trend prediction method of the present invention.

FIG. 2 is a module diagram of a preferred embodiment of a technology trend prediction system according to the present invention.

FIG. 3 is a model mechanism diagram of a preferred embodiment of the technology trend prediction method according to the present invention.

**DETAILED DESCRIPTION OF THE EMBODIMENTS**

Further description of the present invention is provided below with reference to specific embodiments and drawings.

Embodiment 1

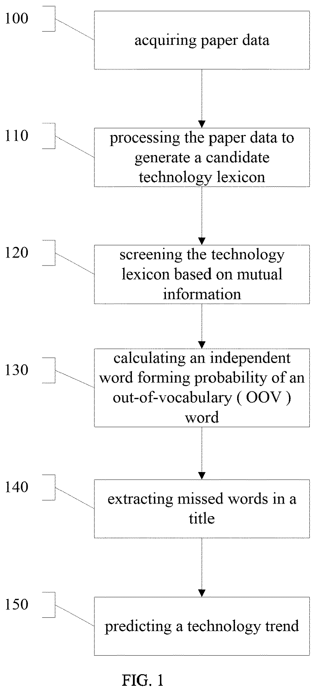

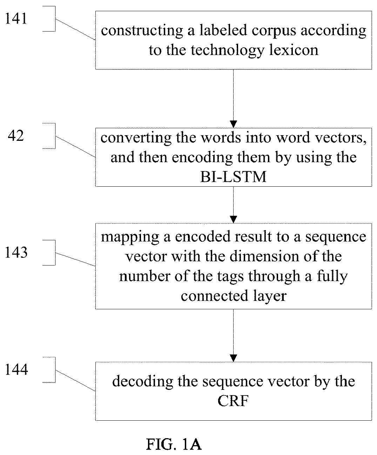

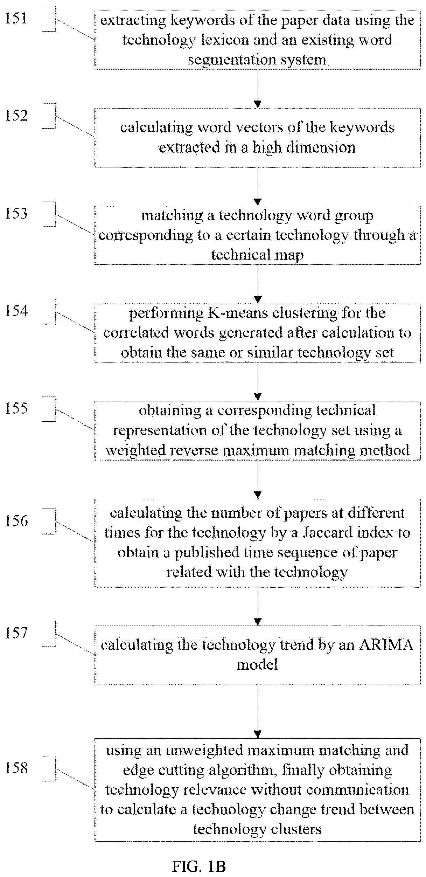

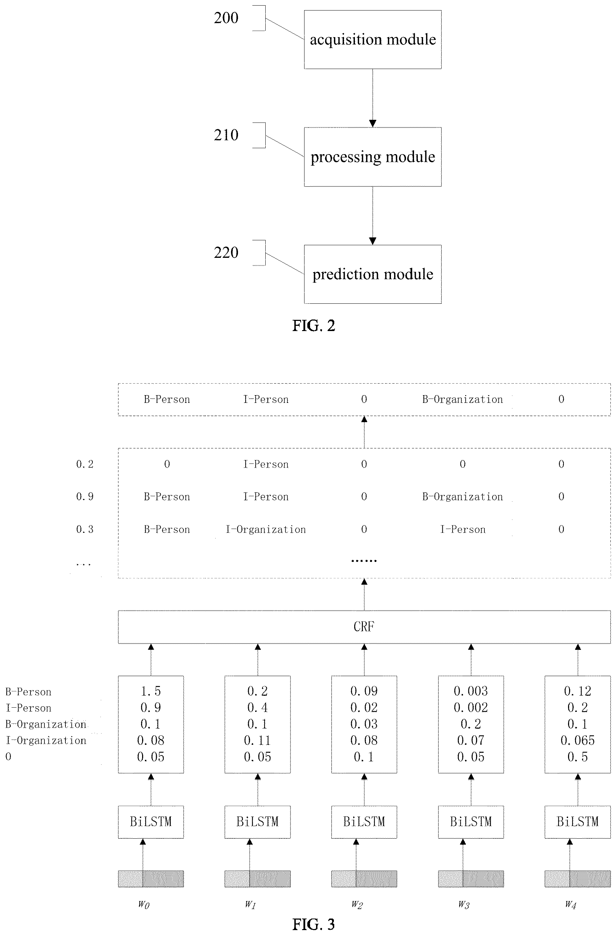

As shown in FIG.1 and FIG.2, step 100 is performed, an acquisition module 200 acquires paper data and construct a set of paper data.

Step 110 is performed to process the paper data to generate a candidate technology lexicon using a processing module 210. Part-of-speech filtering is performed by using an existing part-of-speech tagging, and a preliminary lexicon is obtained after the part-of-speech filtering is completed. OOV ( out-of-vocabulary ) word discovery of the technology lexicon is improved by using a Hidden Markov Model (HMM) method. A formula of the HMM method is:

$$\log\{P(X|Y)P(Y)\} = \pi(y_1) + \sum_{2}^{n} \{\log\{P(y_i|y_{i-1})\} + \log\{P(x_i|y_i)\}\}$$

wherein, $x$ is an observation sequence, $y$ is a state sequence, $\pi(y_1)$ represents a probability that the first state is $y_1$, $P$ represents a state transition probability, $i$ represents the i-th state, and $n$ represents the number of states.

Step 120 is performed to screen the technology lexicon based on mutual information using a screening module 220. The mutual information of the OOV words is calculated, a suitable threshold is selected, and the OOV words with the mutual information lower than this threshold is removed, and a calculation formula is:

$$MI_s = \frac{P(t_1 t_2 ... t_i)}{\sum_i P(t_i) - PP(t_1 t_2 ... t_i)} \approx \frac{\frac{f(t_1 t_2 ... t_i)}{L}}{\frac{\sum_i f(t_i)}{L} - \frac{f(t_1 t_2 ... t_i)}{L}}$$

wherein, $t_1 t_2 ... t_i$ represents the OOV word, $t_i$ represents characters forming the OOV word, $f(t_1 t_2 ... t_i)$ represents a frequency of the OOV word appearing in patent, $L$ represents a total word frequency of all words in the patent, $i$ represents the number of characters forming the OOV word, $P(t_1 t_2 ... t_i)$ represents a probability that the $t_1 t_2 ... t_i$ appears in the patent.

A result above is compensated with a word length when the frequency of long word is less than the that of short word appearing in text, and the compensated result is:

$$MI_s \approx \frac{f(t_1 t_2 ... t_i)}{\sum_i f(t_i) - f(t_1 t_2 ... t_i)} \times N_i$$

wherein, $N_i = i \log_2 i$.

Step 130 is performed to calculate an independent word forming probability of the OOV words using a calculation module 230. Another suitable threshold is selected, and the OOV words with the independent word forming probability lower than this threshold are removed, formulas are as follows:

$$Ldp = p(Lpstr|str) = \frac{p(Lpstr)}{p(str)} = \frac{f(Lpstr)}{f(str)}$$

$$Rdp = p(Rpstr|str) = \frac{p(Rpstr)}{p(str)} = \frac{f(Rpstr)}{f(str)}$$

$$Idp(str) = 1 - dp(pstr|str) = 1 - max\{Ldp(str), Rdp(str)\}$$

wherein, *str* represents a substring, *pstr* represents a parent string, *Rpstr* represents a right parent string, *Lpstr* represents a left parent string, p(.) represents the probability that a character string appears, *f*(.) represents the frequency of the character string, *Ldp* represents dependence of the substring on the left parent string, Rdp represents the dependence of the substring on the right parent string, *Idp* represents the independent word forming probability of the substring, *dp* represents the dependence of the substring on the parent string and is the maximum value of the *Idp* and the *Rdp.*

Step 140 is performed, and an extraction module 240 extracts missed words in a title by using a bidirectional long short memory network BI-LSTM and a conditional random field CRF (BI-LSTM+ CRF ) model.

As shown in FIG.1A, a training method of the BI-LSTM+ CRF model includes the following sub-steps. Step 141 is performed to construct a labeled corpus according to the technology lexicon, take the words in the title which also in the lexicon obtained in the step 3 as a training corpus of the model, take the other words in the title as a predicted corpus of the model, and label the words in the title of the training corpus with B, I and O three types of tags, wherein B represents a beginning character of new word, I represents an internal character of the new word, and O represents a non-technical noun word. Step 142 is performed to convert the words into word vectors, and then encode them by using the BI-LSTM. Step 143 is performed to map an encoded result to a sequence vector with the dimension of the number of the tags through a fully connected layer. Step 144 is performed to decode the sequence vector by the CRF. The trained BI-LSTM+CRF model is applied to the predicted corpus, and words labeled as B and I are extracted as new words discovered.

Step 150 is performed to predict a technology trend using a prediction module 250. As shown in FIG.1B, in this step, step 151 is performed to extract keywords of the paper data using the technology lexicon and an existing word segmentation system. The keywords are extracted using a weighted term frequency - inverse document frequency( TF-IDF ) method, and a formula is:

$$weght(T_{ij}) = tf_{ij} \times idf_j = \frac{n_{ij}}{\sum_k n_{kj}} \times log\frac{|D|}{\left|\{j:\ term_i \in d_j\}\right| + 1}$$

wherein, $T_{ij}$ is a feature word, $tf_{ij}$ is a feature word frequency, $idf_j$ is an inverse document frequency, $n_{ij}$ is the number of occurrences of the feature word in the paper $d_j$, k is the number of words in one paper, $n_{kj}$ is the total number of words in the paper $d_j$, $D$ is the total number of all papers in the corpus, $|\{j:\ term_i \in d_j\}|$ is the number of documents containing the feature word $term_i$.

Step 152 is performed to calculate word vectors of the extracted keywords in a high dimension to obtain $x_t \in \mathbb{R}^d$, wherein d is a spatial dimension, and $\mathbb{R}$ is a set of word vectors.

Step 153 is performed to match a technology word group w={w1,w2,w3...} corresponding to a certain technology through a technical map, calculate correlated word of the word in the technology word group w in the paper data, and obtain wt={w1t, w2t, w3t...}, wherein t is the time when the word appears for the first time in the paper.

Step 154 is performed to perform K-means clustering for the correlated words generated after calculation to obtain the same or similar technology set. A formula of the clustering is:

$$c^{(i)} := \arg\min_{j} \left\| x^{(i)} - \mu_j \right\|^2$$

wherein,x is a technology word group vector, $\mu$ is a technology core word vector.

Step 155 is performed to obtain a corresponding technical representation of the technology set using a weighted reverse maximum matching method, wherein different technology keywords have different weights in the technical map.

Step 156 is performed to calculate the number of papers at different times for the technology by a Jaccard index to obtain a published time sequence of papers related with the technology, and a Jaccard index formula is:

$$(w1, w2) = \frac{w1 \cap w2}{w1 \cup w2}$$

wherein, $w1$ is a keyword in the technology set, and $w2$ is a keyword in the paper.

Step 157 is performed to calculate the technology trend by an ARIMA (Autoregressive Integrated Moving Average) model. A formula for calculating the technology trend:

$$\left(1 - \sum_{i=1}^{p} \phi_i L^i\right)(1 - L)^d X_t = \left(1 + \sum_{i=1}^{q} \theta_i L^i\right)\varepsilon_t$$

wherein, p is a autoregressive term, $\phi$ is a slope coefficient, L is a lag operator, d is a fractional order, X is a technical correlation, q is a corresponding number of moving average terms, $\theta$ is a moving average coefficient, $\varepsilon$ is a technical coefficient.

Step 158 is performed to use an unweighted maximum matching and edge cutting algorithm, finally obtain technology relevance without communication to calculate a technology change trend between technology clusters.

Embodiment 2

The present invention comprises the following steps.

The first step: processing a technology lexicon.

a) Step 1: acquiring paper data to construct a set of paper data.

b) Step 2: generating a candidate technology lexicon. A specific realization method is: performing part-of-speech filtering by using an existing part-of-speech tagging, and obtaining a preliminary lexicon after the part-of-speech filtering is completed, a method of the part-of-speech filtering is as follow:

| two-word terms | three-word terms |
|:---:|:---:|
| N+N | N+N+N |
| N+V | V+N+N |
| V+N | N+V+N |
| A+N | V+V+N |
| D+N | B+V+N |
| B+N | N+M+N |

wherein, N represents a noun, V represents a verb, B represents a distinguishing word, A represents an adjective, D represents a adverb, M represents a numeral, and a multi-word term is generated by different combinations of part-of-speech.

c) Step 3: improving OOV word discovery of the technology lexicon using a Hidden Markov Model ( HMM ) method, a formula of the HMM method is:

$$log\{P(X|Y)P(Y)\} = \pi(y_1) + \sum_{2}^{n} \{log\{P(y_i|y_{i-1})\} + log\{P(x_i|y_i)\}\}$$

wherein, $x$ is an observation sequence, $y$ is a state sequence, $\pi(y_1)$ represents a probability that the first state is $y_1$.

d) Step 4: screening the lexicon generated above using a mutual information method. The mutual information of the OOV words is calculated, a suitable threshold is selected, and the OOV words with the mutual information lower than this threshold are removed, and a formula is:

$$MI_s = \frac{P(t_1t_2...t_i)}{\sum_i P(t_i) - PP(t_1t_2...t_i)} \approx \frac{\frac{f(t_1t_2...t_i)}{L}}{\frac{\sum_i f(t_i)}{L} - \frac{f(t_1t_2...t_i)}{L}}$$

wherein, $t_1t_2...t_i$ represents the OOV word, $t_i$ represents the characters forming the OOV word, $f(t_1t_2...t_i)$ represents a frequency of the OOV word appearing in patent, $L$ represents a total word frequency of all words in the patent, $i$ represents the number of characters forming the OOV word, $P(t_1t_2...t_i)$ represents a probability that the $t_1t_2...t_i$ appears in the patent. According to a statistical result, the frequency of the long word is less than that of short word appearing in text, so a result above is compensated with a word length, and the compensated result is:

$$MI_s \approx \frac{f(t_1t_2...t_i)}{\sum_i f(t_i) - f(t_1t_2...t_i)} \times N_i$$

wherein, $N_i = i \log_2 i$.

e) Step 5: reducing broken strings in the lexicon generated above. An independent word forming probability of a OOV word is calculated, another suitable threshold is selected, and the OOV words with independent word forming probability lower than this threshold are removed, a formula is:

$$Ldp = p(Lpstr|str) = \frac{p(Lpstr)}{p(str)} = \frac{f(Lpstr)}{f(str)}$$

$$Rdp = p(Rpstr|str) = \frac{p(Rpstr)}{p(str)} = \frac{f(Rpstr)}{f(str)}$$

$$Idp(str) = 1 - dp(pstr|str) = 1 - max\{Ldp(str), Rdp(str)\}$$

wherein, *str* represents a substring, *pstr* represents a parent string, *Rpstr* represents a right parent string, *Lpstr* represents a left parent string, p(.) represents the probability that a character string appears, *f*(.) represents the frequency of the character string, *Ldp* represents dependence of the substring on the left parent string, *Rdp* represents the dependence of the substring on the right parent string, *Idp* represents the independent word forming probability of the substring.

f) Step 6: extracting missed words in a title after the above steps to improve a recall rate using a BI-LSTM+CRF model:

i. constructing a labeled corpus according to the technology lexicon obtained after the above steps, taking the words in the title which also in the lexicon as a training corpus of the model, taking the other words in the title as a predicted corpus of the model, and labeling the words in the title of the training corpus with B, I and O three types of tags, wherein B represents a beginning character of new word, I represents an internal character of the new word, and O represents a non-technical noun word;

ii. converting the words into word vectors, and then encoding them by using the BI-LSTM;

iii. mapping an encoded result to a sequence vector with the dimension of the number of the tags through a fully connected layer;

iv. decoding the sequence vector obtained above by the CRF;

v. training a model according to the above steps, and then applying the trained BI-LSTM+CRF model to the predicted corpus, and extracting words labeled as B and I e as new words discovered.

The second step: predicting a technology trend.

a). Keywords of the paper data are extracted using the technology lexicon generated in the first step and an existing word segmentation system; the keywords are extracted using a weighted (TF-IDF ) method, and a formula is:

$$weght(T_{ij}) = tf_{ij} \times idf_j = \frac{n_{ij}}{\sum_k n_{kj}} \times log\frac{|D|}{|\{j: \ term_i \in d_j\}| + 1}$$

$$f(w) = t(w) + title(w) + tec(w),$$

$$title(w) = \begin{cases} 5, w \ in \ the \ title \\ 0, no \ w \ in \ the \ title \end{cases}, tec(w) = \begin{cases} 3, w \ in \ the \ title \\ 0, no \ w \ in \ the \ title \end{cases}$$

wherein, $t(w) = weight(T_{ij})$ is a TF-IDF value of a feature $T_{ij}$ in a document $d_j$; $title(w)$ is the weight of the word w when the word w appears in the title, and $tec(w)$ is the weight of the word w when the word w appears in the technology field.

b). Word vectors of the extracted keywords in a high dimension are calculated to obtain $x_t \in \mathbb{R}^d$, wherein d is a spatial dimension.

c). A technology word group w={w1,w2,w3...} corresponding to a certain technology is matched through a technical map, and then correlated word of the word in the technology word group w in the paper data is calculated to obtain wt={wlt, w2t, w3t...},wherein t is the time when the word appears for the first time in the paper.

d). K-means clustering is performed for the correlated words generated after calculation to obtain the same or similar technology set:

$$c^{(i)} := arg \min_j \left\| x^{(i)} - \mu_j \right\|^2.$$

e). A corresponding technical representation of the technology set is obtained by using a weighted reverse maximum matching method, wherein different technology keywords have different weights in the technical map.

f). The number of papers at different times for the technology is calculated to obtain a published time sequence of papers related with the technology.

g). the technology trend is calculated by a ARIMA model, and a formula is:

$$\left(1 - \sum_{i=1}^{p} \phi_i L^i\right)(1-L)^d X_t = \left(1 + \sum_{i=1}^{q} \theta_i L^i\right)\varepsilon_t$$

wherein, *L* is a lag operator, *d* is in Z and d>0.

h). An unweighted maximum matching and edge cutting algorithm is used to obtain technology relevance without communication, and a technology change trend between e technology clusters is calculated.

In order to better understand the present invention, the detailed description is made above in conjunction with the specific embodiments of the present invention, but it is not a limitation of the present invention. Any simple modification to the above embodiments based on the technical essence of the present invention still belongs to the scope of the technical solution of the present invention. Each embodiment in this specification focuses on differences from other embodiments, and the same or similar parts between the various embodiments can be referred to each other. As for the system embodiment, since it basically corresponds to the method embodiment, the description is relatively simple, and the relevant part can refer to the part of the description of the method embodiment.

## Claims

1. A technology trend prediction method, comprising: acquiring paper data, **characterized in that**, further comprises the following steps:

> step 1: processing the paper data to generate a candidate technology lexicon;
> step 2: screening the technology lexicon based on mutual information;
> step 3: calculating an independent word forming probability of an out-of-vocabulary (OOV) word;
> step 4: extracting missed words in a title using a bidirectional long short memory network and a conditional random field ( BI-LSTM+CRF) model;
> step 5: predicting a technology trend.

2. The technology trend prediction method according to claim 1, **characterized in that**, the step of acquiring paper data also comprises constructing a set of paper data.

3. The technology trend prediction method according to claim 2, **characterized in that**, the step 1 comprises performing part-of-speech filtering by using an existing part-of-speech tagging, and obtaining a preliminary lexicon after the part-of-speech filtering is completed.

4. The technology trend prediction method according to claim 3, **characterized in that**, the step 1 further comprises improve OOV word discovery of the technology lexicon by using a Hidden Markov Model (HMM) method.

5. The technology trend prediction method according to claim 3, **characterized in that**, a formula of the HMM method is:

$$log\,\{P(X|Y)P(Y)\} = \pi(y_1) + \sum_{2}^{n} \{log\,\{P(y_i|y_{i-1})\} + log\,\{P(x_i|y_i)\}\}$$

wherein, *x* is an observation sequence, *y* is a state sequence, $\pi(y_1)$ represents a probability that the first state is $y_1$, *P* represents a state transition probability, *i* represents the i-th state, and *n* represents the number of states.

6. The technology trend prediction method according to claim 5, **characterized in that**, the step 2 comprises calculating the mutual information of the OOV words, selecting a suitable threshold, and removing the OOV words with the mutual information lower than this threshold, and a calculation formula is:

$$MI_s = \frac{P(t_1 t_2 \ldots t_i)}{\sum_i P(t_i) - PP(t_1 t_2 \ldots t_i)} \approx \frac{\frac{f(t_1 t_2 \ldots t_i)}{L}}{\frac{\sum_i f(t_i)}{L} - \frac{f(t_1 t_2 \ldots t_i)}{L}}$$

wherein, $t_1 t_2 \ldots t_i$ represents the OOV word, $t_i$ represents characters forming OOV word, $f(t_1 t_2 \ldots t_i)$ represents a frequency of the OOV word appearing in patent, $L$ represents a total word frequency of all words in the patent, $i$ represents the number of characters forming the OOV word, $P(t_1 t_2 \ldots t_i)$ represents a probability that the $t_1 t_2 \ldots t_i$ appears in the patent.

7. The technology trend prediction method according to claim 6, **characterized in that**, the step 2 also comprises that a result above is compensated with a word length when the frequency of long word is less than that of short word appearing in the text, and the result compensated is:

$$MI_s \approx \frac{f(t_1 t_2 \ldots t_i)}{\sum_i f(t_i) - f(t_1 t_2 \ldots t_i)} \times N_i$$

wherein, $N_i = i \log_2 i$.

8. The technology trend prediction method according to claim 7, **characterized in that**, the step 3 comprises selecting another suitable threshold, and removing the OOV words with independent word forming probability lower than this threshold, formulas are as follows:

$$Ldp = p(Lpstr|str) = \frac{p(Lpstr)}{p(str)} = \frac{f(Lpstr)}{f(str)}$$

$$Rdp = p(Rpstr|str) = \frac{p(Rpstr)}{p(str)} = \frac{f(Rpstr)}{f(str)}$$

$$Idp(str) = 1 - dp(pstr|str) = 1 - max\{Ldp(str), Rdp(str)\}$$

wherein, *str* represents a substring, *pstr* represents a parent string, *Rpstr* represents a right parent string, *Lpstr* represents a left parent string, p(.) represents the probability that a character string appears, f(.) represents the frequency of the character string, *Ldp* represents dependence of the substring on the left parent string, *Rdp* represents the dependence of the substring on the right parent string, *Idp* represents the independent word forming probability of the substring, dp represents the dependence of the substring on the parent string and is the maximum value of the *Idp* and the *Rdp*.

9. The technology trend prediction method according to claim 8, **characterized in that**, a training method of the BI-LSTM+CRF model comprises the following sub-steps:

step 41: constructing a labeled corpus according to the technology lexicon, taking the words in the title which also in the lexicon obtained in the step 3 as a training corpus of the model, taking the other word in the title as a predicted corpus of the model, and labeling the words in the title of the training corpus with B, I and O three types of tags, wherein B represents a beginning character of new word, I represents an internal character of the new word, and O represents a non-technical noun word;
step 42: converting the words into word vectors, and then encoding them by using the BI-LSTM;
step 43: mapping an encoded result to a sequence vector with the dimension of the number of the tags through a fully connected layer;
step 44: decoding the sequence vector by the CRF.

10. The technology trend prediction method according to claim 9, **characterized in that**, the step 4 further comprises applying the trained BI-LSTM+CRF model to the predicted corpus, and extracting words labeled as B and I as new words discovered.

11. The technology trend prediction method according to claim 1, **characterized in that**, the step 5 comprises the following sub-steps:

> step 51: extracting keywords of the paper data using the technology lexicon and an existing word segmentation system;
>
> step 52: calculating word vectors of the extracted keywords in a high dimension to obtain $x_t \in \mathbb{R}^d$ , wherein d is a spatial dimension, and $\mathbb{R}$ is a set of word vector ;
>
> step 53: matching a technology word group w={w1,w2,w3...} corresponding to a certain technology through a technical map, calculating correlated word of the word in the technology word group w in the paper data to obtain wt={wlt, w2t, w3t...}, wherein t is the time when the word appears for the first time in the paper;
>
> step 54: performing K-means clustering for the correlated words generated after calculation to obtain the same or similar technology set;
>
> step 55: obtaining a corresponding technical representation of the technology set using a weighted reverse maximum matching method, wherein different technical keywords have different weights in the technical map;
>
> step 56: calculating the number of papers at different times for the technology by a Jaccard index to obtain a published time sequence of paper related with the technology, and a Jaccard index formula is:

$$(w1, w2) = \frac{w1 \cap w2}{w1 \cup w2}$$

> wherein, $w1$ is a keyword in the technology set, and w2 is a keyword in the paper;
>
> step 57: calculating the technology trend by an ARIMA model;
>
> step 58: using an unweighted maximum matching and edge cutting algorithm, finally obtaining technology relevance without communication to calculate a technology change trend between technology clusters.

12. The technology trend prediction method according to claim 11, **characterized in that**, the keywords are extracted using a weighted term frequency-inverse document frequency ( TF-IDF ), and a formula is:

$$weght(T_{ij}) = tf_{ij} \times idf_j = \frac{n_{ij}}{\sum_k n_{kj}} \times log \frac{|D|}{|\{j: \ term_i \in d_j\}| + 1}$$

wherein, $T_{ij}$ is a feature word, $tf_{ij}$ is a feature word frequency, $idf_j$ is an inverse document frequency, $n_{ij}$ is the number of occurrences of the feature word in the paper $d_j$, k is the number of words in one paper, $n_{kj}$ is the total number of words in the paper $d_j$, $D$ is the total number of all papers in the corpus, $|\{j: term_i \in d_j\}|$ is the number of documents containing the feature word $term_i$.

13. The technology trend prediction method according to claim 11, **characterized in that**, a formula of the clustering is:

$$c^{(i)} := arg \min_j \left\| x^{(i)} - \mu_j \right\|^2$$

wherein, $x$ is a technology word group vector, $\mu$ is a technology core word vector.

14. The technology trend prediction method according to claim 11, **characterized in that**, a formula for calculating the technology trend is:

$$\left(1 - \sum_{i=1}^{p} \phi_i L^i\right)(1 - L)^d X_t = \left(1 + \sum_{i=1}^{q} \theta_i L^i\right)\varepsilon_t$$

wherein, $p$ is a autoregressive term, $\phi$ is a slope coefficient, $L$ is a lag operator, d is a fractional order, $X$ is a technical correlation, $q$ is a corresponding number of moving average terms, $\theta$ is a moving average coefficient, $\varepsilon$ is a technical coefficient.

15. A technology trend prediction system, comprises an acquisition module used for acquiring paper data, **characterized in that**, further comprises the following modules:

> a processing module, used for processing the paper data to generate a candidate technology lexicon;
> a screening module, used for screening the technology lexicon based on mutual information;
> a calculation module, used for calculating an independent word forming probability of a OOV word;
> an extraction module, used for extracting missed words in a title by using a bidirectional long short memory network and a conditional random field (BI-LSTM+CRF) model;
> a prediction module, used for predicting a technology trend.

16. The technology trend prediction system according to claim 15, **characterized in that**, the acquisition module is also used for constructing a set of paper data.

17. The technology trend prediction system according to claim 16, **characterized in that**, the processing module is also used for performing part-of-speech filtering by using an existing part-of-speech tagging, and obtaining a preliminary lexicon after the part-of-speech filtering is completed.

18. The technology trend prediction system according to claim 17, **characterized in that**, the processing module is also used for improving OOV word discovery of the technology lexicon by using a Hidden Markov Model (HMM) method.

19. The technology trend prediction system according to claim 17, **characterized in that**, a formula of the HMM method is:

$$log\,\{P(X|Y)P(Y)\} = \pi(y_1) + \sum_{2}^{n} \{log\,\{P(y_i|y_{i-1})\} + log\,\{P(x_i|y_i)\}\}$$

wherein, $x$ is an observation sequence, $y$ is a state sequence, $\pi(y_1)$ represents a probability that the first state is $y_1$, $P$ represents a state transition probability, $i$ represents the i-th state, and $n$ represents the number of states.

20. The technology trend prediction system according to claim 19, **characterized in that**, the screening module is also used for calculating the mutual information of the OOV words, selecting a suitable threshold, and removing the OOV words with the mutual information lower than this threshold, a calculation formula is:

$$MI_s = \frac{P(t_1 t_2 ... t_i)}{\sum_i P(t_i) - PP(t_1 t_2 ... t_i)} \approx \frac{\frac{f(t_1 t_2 ... t_i)}{L}}{\frac{\sum_i f(t_i)}{L} - \frac{f(t_1 t_2 ... t_i)}{L}}$$

wherein, $t_1 t_2 ... t_i$ represents the OOV word, $t_i$ represents characters forming the OOV word, $f(t_1 t_2 ... t_i)$ represents a frequency of the OOV word appearing in patent, $L$ represents a total word frequency of all words in the patent, $i$ represents the number of characters forming the OOV word, $P(t_1 t_2 ... t_i)$ represents a probability that the $t_1 t_2 ... t_i$ appears in the patent.

21. The technology trend prediction system according to claim 20, **characterized in that**, the screening module is also used for that a result above is compensated with a word length when the frequency of long word is less than that of short word appearing in text, and the compensated result is that:

$$MI_s \approx \frac{f(t_1 t_2 ... t_i)}{\sum_i f(t_i) - f(t_1 t_2 ... t_i)} \times N_i$$

wherein, $N_i = i\,log_2\,i$.

**22.** The technology trend prediction system according to claim 21, **characterized in that**, the calculation module is also used for selecting another suitable threshold, and removing the OOV words with the independent word forming probability lower than this threshold, formulas are:

$$Ldp = p(Lpstr|str) = \frac{p(Lpstr)}{p(str)} = \frac{f(Lpstr)}{f(str)}$$

$$Rdp = p(Rpstr|str) = \frac{p(Rpstr)}{p(str)} = \frac{f(Rpstr)}{f(str)}$$

$$Idp(str) = 1 - dp(pstr|str) = 1 - max\{Ldp(str), Rdp(str)\}$$

wherein, *str* represents a substring, *pstr* represents a parent string, *Rpstr* represents a right parent string, *Lpstr* represents a left parent string, p(.) represents the probability that a character string appears, *f*(.) represents the frequency of the character string, *Ldp* represents dependence of the substring on the left parent string, *Rdp* represents the dependence of the substring on the right parent string, *Idp* represents the independent word forming probability of the substring, dp represents the dependence of the substring on the parent string and is the maximum value of the *Idp* and the *Rdp*.

**23.** The technology trend prediction system according to claim 22, **characterized in that**, a training method of the BI-LSTM+CRF model comprises the following sub-steps:

step 41: constructing a labeled corpus according to the technology lexicon, taking the words in the titled which also in the lexicon obtained in the step 1-step13 as a training corpus of the model, taking the other words in the title as a predicted corpus of the model, and labeling the words in the title of the training corpus with B, I and O three types of tags, wherein B represents a beginning character of new word, I represents an internal character of the new word, and O represents a non-technical noun word;
step 42: converting the words into word vectors, and then encoding them by using the BI-LSTM;
step 43: mapping an encoded result to a sequence vector with the dimension of the number of the tags through a fully connected layer.
step 44: decoding the sequence vector by the CRF.

**24.** The technology trend prediction system according to claim 23, **characterized in that**, the extraction module is also used for applying the trained BI-LSTM+CRF model to the predicted corpus, and extracting words labeled as B and I as new words discovered.

**25.** The technology trend prediction system according to claim 15, **characterized in that**, an operation of the prediction module comprises the following sub-steps:

step 51: extracting keywords of the paper data using the technology lexicon and an existing word segmentation system;
step 52: calculating word vectors of the extracted keywords in a high dimension to obtain $x_t \in \mathbb{R}^d$ , wherein d is a spatial dimension, and $\mathbb{R}$ is a set of word vectors;
step 53: matching a technology word group w={w1,w2,w3...} corresponding to a certain technology through a technical map, calculating correlated word of the word in the technology word group w in the paper data to obtain wt={wlt, w2t, w3t...}, wherein t is the time when the word appears for the first time in the paper;
step 54: performing K-means clustering for the correlated words generated after calculation to obtain the same or similar technology set;
step 55: obtaining a corresponding technical representation of the technology set using a weighted reverse maximum matching method, wherein different technology keywords have different weights in the technical map;
step 56: calculating the number of papers at different times for the technology by a Jaccard index to obtain a published time sequence of papers related with the technology , and a Jaccard index formula is:

$$(w1, w2) = \frac{w1 \cap w2}{w1 \cup w2}$$

where, $w1$ is a keyword in the technology set, and $w2$ is a keyword in the paper;

step 57: calculating the technology trend by an ARIMA model;

step 58: using an unweighted maximum matching and edge cutting algorithm, finally obtaining technology relevance without communication to calculate a technology change trend between technology clusters.

26. The technology trend prediction system according to claim 25, **characterized in that**, the keywords are extracted using a weighted term frequency-inverse document frequency ( TF-IDF ), and a formula is:

$$weght(T_{ij}) = tf_{ij} \times idf_j = \frac{n_{ij}}{\sum_k n_{kj}} \times log\frac{|D|}{|\{j: \; term_i \in d_j\}| + 1}$$

wherein, $T_{ij}$ is a feature word, $tf_{ij}$ is a feature word frequency, $idf_j$ is an inverse document frequency, $n_{ij}$ is the number of occurrences of the feature word in the paper $d_j$, k is the number of words in one paper, $n_{kj}$ is the total number of words in the paper $d_j$, D is the total number of all papers in the corpus, $|\{j: term_i \in d_j\}|$ is the number of documents containing the feature word $term_i$.

27. The technology trend prediction system according to claim 25, **characterized in that**, a formula of the clustering is:

$$c^{(i)} := arg\,min_j \left\| x^{(i)} - \mu_j \right\|^2$$

wherein, $x$ is a technology word group vector, $\mu$ is a technology core word vector.

28. The technology trend prediction system according to claim 27, **characterized in that**, a formula for calculating the technology trend is:

$$\left(1 - \sum_{i=1}^{p} \phi_i L^i\right)(1 - L)^d X_t = \left(1 + \sum_{i=1}^{q} \theta_i L^i\right)\varepsilon_t$$

wherein, $p$ is a autoregressive term, $\phi$ is a slope coefficient, $L$ is a lag operator , d is a fractional order, $X$ is a technical correlation, q is a corresponding number of moving average terms, $\theta$ is a moving average coefficient, $\varepsilon$ is a technical coefficient.

100 — acquiring paper data

110 — processing the paper data to generate a candidate technology lexicon

120 — screening the technology lexicon based on mutual information

130 — calculating an independent word forming probability of an out-of-vocabulary ( OOV ) word

140 — extracting missed words in a title

150 — predicting a technology trend

FIG. 1

141 — constructing a labeled corpus according to the technology lexicon

42 — converting the words into word vectors, and then encoding them by using the BI-LSTM

143 — mapping a encoded result to a sequence vector with the dimension of the number of the tags through a fully connected layer

144 — decoding the sequence vector by the CRF

FIG. 1A

151 — extracting keywords of the paper data using the technology lexicon and an existing word segmentation system

152 — calculating word vectors of the keywords extracted in a high dimension

153 — matching a technology word group corresponding to a certain technology through a technical map

154 — performing K-means clustering for the correlated words generated after calculation to obtain the same or similar technology set

155 — obtaining a corresponding technical representation of the technology set using a weighted reverse maximum matching method

156 — calculating the number of papers at different times for the technology by a Jaccard index to obtain a published time sequence of paper related with the technology

157 — calculating the technology trend by an ARIMA model

158 — using an unweighted maximum matching and edge cutting algorithm, finally obtaining technology relevance without communication to calculate a technology change trend between technology clusters

FIG. 1B

| 200 | acquisition module |
|---|---|

↓

| 210 | processing module |
|---|---|

↓

| 220 | prediction module |
|---|---|

FIG. 2

| | B-Person | I-Person | 0 | B-Organization | 0 |
|---|---|---|---|---|---|

↑

| 0.2 | 0 | I-Person | 0 | 0 | 0 |
|---|---|---|---|---|---|
| 0.9 | B-Person | I-Person | 0 | B-Organization | 0 |
| 0.3 | B-Person | I-Organization | 0 | I-Person | 0 |
| ... | | | ...... | | |

↑

| CRF |
|---|

↑ ↑ ↑ ↑ ↑

| B-Person | 1.5 | 0.2 | 0.09 | 0.003 | 0.12 |
|---|---|---|---|---|---|
| I-Person | 0.9 | 0.4 | 0.02 | 0.002 | 0.2 |
| B-Organization | 0.1 | 0.1 | 0.03 | 0.2 | 0.1 |
| I-Organization | 0.08 | 0.11 | 0.08 | 0.07 | 0.065 |
| 0 | 0.05 | 0.05 | 0.1 | 0.05 | 0.5 |

↑ ↑ ↑ ↑ ↑

| BiLSTM | BiLSTM | BiLSTM | BiLSTM | BiLSTM |
|---|---|---|---|---|

↑ ↑ ↑ ↑ ↑

$W_0$ $W_1$ $W_2$ $W_3$ $W_4$

FIG. 3

## INTERNATIONAL SEARCH REPORT

| International application No. |
|---|
| **PCT/CN2020/073296** |

**A.    CLASSIFICATION OF SUBJECT MATTER**

G06F 16/33(2019.01)i

According to International Patent Classification (IPC) or to both national classification and IPC

**B.    FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNKI, CNPAT, WPI, EPODOC: 技术, 趋势, 预测, 论文, 词库, 互信息, 独立, 成词, 概率, 神经网络, 双向长短记忆网络, 条件随机场, technology, trend, predict, paper, lexicon, probability, mutual, independent, word, neural, network, LSTM, CRF

**C.    DOCUMENTS CONSIDERED TO BE RELEVANT**

| Category* | Citation of document, with indication, where appropriate, of the relevant passages | Relevant to claim No. |
|---|---|---|
| A | CN 110598972 A (ZHEJIANG HUAYUN INFORMATION TECHNOLOGY CO., LTD. et al.) 20 December 2019 (2019-12-20) <br> claim 1 | 1-28 |
| A | CN 109800288 A (HANGZHOU NORMAL UNIVERSITY) 24 May 2019 (2019-05-24) <br> entire document | 1-28 |
| A | US 2008249764 A1 (MICROSOFT CORPORATION) 09 October 2008 (2008-10-09) <br> entire document | 1-28 |

☐ Further documents are listed in the continuation of Box C.        ☑ See patent family annex.

| | |
|---|---|
| *    Special categories of cited documents: <br> "A"  document defining the general state of the art which is not considered to be of particular relevance <br> "E"  earlier application or patent but published on or after the international filing date <br> "L"  document which may throw doubts on priority claim(s) or which is cited to establish the publication date of another citation or other special reason (as specified) <br> "O"  document referring to an oral disclosure, use, exhibition or other means <br> "P"  document published prior to the international filing date but later than the priority date claimed | "T"  later document published after the international filing date or priority date and not in conflict with the application but cited to understand the principle or theory underlying the invention <br> "X"  document of particular relevance; the claimed invention cannot be considered novel or cannot be considered to involve an inventive step when the document is taken alone <br> "Y"  document of particular relevance; the claimed invention cannot be considered to involve an inventive step when the document is combined with one or more other such documents, such combination being obvious to a person skilled in the art <br> "&"  document member of the same patent family |

| Date of the actual completion of the international search | Date of mailing of the international search report |
|---|---|
| **14 September 2020** | **27 September 2020** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/073296**

| Patent document cited in search report | | | Publication date (day/month/year) | Patent family member(s) | Publication date (day/month/year) |
|---|---|---|---|---|---|
| CN | 110598972 | A | 20 December 2019 | None | |
| CN | 109800288 | A | 24 May 2019 | None | |
| US | 2008249764 | A1 | 09 October 2008 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106709021 A